# DEMANDE DE BREVET EUROPEEN

(11) **EP 4 641 440 A2**
(43) Date de publication de la demande: **29.10.2025**
(21) Numéro de dépôt: 25201256.2
(22) Date de dépôt: 15.06.2020
(51) Int. Cl.: G06K 19/077

(54) **ENSEMBLE D'ÉTIQUETTES ÉLECTRONIQUES DE RADIO-IDENTIFICATION, PROCÉDÉ DE FABRICATION DUDIT ENSEMBLE, MACHINE UTILISANT LEDIT ENSEMBLE ET PRODUIT TEXTILE COMPORTANT UNE ETIQUETTE ELECTRONIQUE**

(30) Priorité: 17.06.2019 FR 1906477
(62) Demande divisionnaire de: 20742340.1
(71) Demandeur: Fenotag, 13010 Marseille (FR)
(72) Inventeur: ELBAZ, Didier, 13010 Marseille (FR)
(74) Mandataire: Brun, Philippe Alexandre Georges

(57) **Abrégé**

L'invention concerne un procédé de fabrication d'une bande d'étiquettes électroniques 300 de radio-identification qui comporte les étapes consistant à fournir une bande de tissu 310 comportant des marques de repérage 301 ; à placer une antenne amplificatrice 30 par couture ou broderie ; à placer un module électronique 20 de radio-identification ; et à imprimer des informations sur une zone d'impression 302. Le placement de l'antenne 30, du module électronique 20 et de la zone d'impression 302 est effectué par rapport aux marques de repérage. L'invention concerne également un ensemble d'étiquettes électronique obtenu par le procédé.

## Description

### [Domaine Technique

La présente invention se rapporte à un ensemble d'étiquettes électroniques de radio identification dans le domaine de la traçabilité de produit textiles. Elle concerne également un procédé de fabrication dudit ensemble d'étiquettes, la machine de pose d'étiquette utilisant ledit ensemble d'étiquettes ainsi qu'un produit textile incorporant une étiquette provenant dudit ensemble d'étiquettes.

### Arrière-Plan Technologique

Les étiquettes électroniques de radio-identification, souvent désignées par le terme anglo-saxon « RFID tags », RFID étant l'acronyme de la dénomination Radio Frequency IDdentification, sont des objets de petites tailles utilisés pour mémoriser et restituer des données, à travers une communication par radiofréquences, généralement en lien avec un objet hôte. Une étiquette électronique de radio-identification est donc généralement apposée, c'est-à-dire collée ou cousue par exemple, voire même incorporée, sur ou dans un objet. Une étiquette électronique de radio-identification consiste généralement en un support ou substrat sur lequel est déposée une antenne conductrice associée, c'est-à-dire connectée ou couplée de manière électromagnétique, à un composant électronique. L'antenne confère au composant électronique une interface de communication sans contact ou sans fil pour lui permettre de recevoir des requêtes émises depuis un émetteur ou lecteur par voie radio. En retour, le composant électronique élabore une réponse également transmise via ladite antenne par voie radio. Ces communications sont généralement opérées sur une bande de fréquences de 900 mégahertz environ (ou UHF, acronyme de Ultra Hautes Fréquences) ou 13,56 mégahertz (ou HF, acronyme de Hautes Fréquences) dans le cadre de communication à courtes distances.

La majorité des étiquettes électroniques est dite passive. En effet, l'énergie électrique, nécessaire au fonctionnement du composant électronique d'une telle étiquette, est tirée du champ électromagnétique généré par l'émetteur d'une requête, lorsque celui-ci se trouve à portée de communication de l'étiquette, c'est-à-dire à quelques dizaines de centimètres, voire pour les plus performantes à quelques mètres. D'autres étiquettes électroniques sont dites actives car elles intègrent une source énergétique apte à décupler la puissance et donc la portée d'émission de l'étiquette.

Les étiquettes électroniques fournissent notamment une alternative aux balises ou tags graphiques, tels que les code-barres par exemple, car elles ne nécessitent pas une lecture directe.

Le support constituant la plus grande partie du corps d'une étiquette électronique est composé généralement d'un ou plusieurs matériaux adaptés aux conditions d'utilisation ou d'exploitation de l'étiquette ou de l'objet sur lequel ladite étiquette est apposée ou intégrée. Un tel support peut être rigide ou souple. A titre d'exemples non limitatifs, un tel support peut comporter des matériaux plastiques, cellulosiques ou textiles.

Le choix des matériaux, des constituants utilisés pour confectionner une étiquette électronique de radio-identification, ainsi que le procédé d'assemblage de ladite étiquette influent grandement sur le coût de celle-ci, la pertinence au regard d'une application visée, la robustesse et la pérennité d'une telle étiquette électronique.

Dans la suite du document, nous allons décrire un exemple de réalisation ou d'assemblage d'une étiquette électronique de radio-identification au travers d'un exemple préféré et non limitatif d'application, en lien avec le suivi d'un flux de production d'une blanchisserie ou laverie industrielle. Selon cette application, une étiquette électronique est apposée (cousue généralement) sur un linge, par exemple un drap, pour tracer le flux et la périodicité de lavage dudit linge, en milieu hospitalier ou en hôtellerie. Une telle étiquette électronique doit nécessairement être confectionnée pour être apposée facilement sur ledit linge et résister, c'est-à-dire demeurer opérationnelle, aux environnements et/ou conditions particulièrement sévères rencontrés dans le nettoyage de textiles. Ainsi, l'étiquette doit être peu encombrante et ne pas se détacher ou se déliter au gré du nettoyage ou du repassage du linge. Elle doit notamment résister aux attaques de différents produits chimiques, tels que des acides, bases ou encore détergents, et aux contraintes thermiques de séchage et mécaniques de pressage et/ou d'essorage. Les étiquettes électroniques peuvent également être utilisée sur tout type de produit textile tel que des vêtements afin de pouvoir suivre et tracer ces derniers dans une chaine de distribution commerciale ou tout au long de leur utilisation.

Des étiquettes électroniques, telles que celles décrites dans le document WO2012/126063, comporte un support ou corps principal comportant un matériau textile sélectionné pour être soudé par ultrasons, afin d'enceindre une antenne conductrice ou conductrice couplée à un module de radio-identification de type RFID. Ledit module comporte un composant électronique connecté à une deuxième antenne conductrice agencée pour être couplée à ladite première antenne et ainsi améliorer la portée de communication. Cette dernière se charge de la réception et de l'émission de messages à une portée plus grande. Une telle étiquette résulte d'un procédé d'assemblage nécessitant une quantité importante de textile ou de tissu onéreux car un tel textile ou tissu doit fondre sous l'effet d'ultrasons. Le support textile consiste en une bande pliée en deux dans le sens de la longueur pour enceindre la première antenne, ladite première antenne étant préalablement tissée sur ledit support textile, voire déposée, à l'instar du module de radio-identification, sur une couche d'un matériau adhésif assurant le collage à température ambiante des éléments sur le support. Les deux demi-bandes de tissus sont soudées entre elles par un procédé de soudure par ultrasons, particulièrement complexe à industrialiser et donc couteux in fine. Pour appliquer une telle étiquette sur un objet hôte, tel que par exemple un linge, dont on souhaite tracer le parcours durant un processus de blanchisserie, ladite étiquette est généralement cousue sur ledit objet au risque d'endommager l'antenne et/ou le module durant la couture de l'étiquette.

Pour réduire notamment le volume de tissus requis pour constituer le support d'une étiquette telle que décrite précédemment, un procédé, tel que celui décrit dans le document EP2405054, consiste à utiliser un support textile comprenant une poche dans laquelle est inséré le module de radio-identification de la future étiquette. Une antenne conductrice, agencée pour assurer une communication à champ lointain, est fixée sur le support textile par couture, impression laser, ou encore via une colle appliquée sur ladite poche. Un tel procédé réduit la quantité de tissus nécessaire pour constituer le support de l'étiquette et évite de requérir à l'utilisation de la soudure par ultrasons. Toutefois, la réalisation et l'obturation de la poche complexifie la confection du produit textile. Le gain économique découlant d'une diminution de la quantité de tissus pour constituer le corps de l'étiquette ou encore, de la sélection des matériaux pour agencer le corps de l'étiquette, est compensé ou annulé par la mise en œuvre d'un processus délicat de couture pour réaliser la poche pour héberger le module puis pour clôturer ladite poche.

Une autre technique, divulguée par le document WO2017/060652, consiste à produire les étiquettes sur une bande textile sur laquelle des antennes sont déposées, chaque antenne formant au moins une boucle à l'intérieure de laquelle un module RFID est disposé. L'ensemble est ensuite recouvert d'un matériau thermoplastique. Les étiquettes ainsi obtenues peuvent être collées sur un objet hôte par pressage à chaud. Ce procédé de fabrication, constitue une alternative peu couteuse pour la fabrication d'étiquette RFID. Néanmoins, une opération de fixation spécifique est nécessaire pour la lier à un produit textile.

Le document WO 2015/063393 divulgue un procédé de fabrication d'une bande d'étiquettes électronique dans lequel une antenne et une puce électronique sont déposées sur une bande textile. La bande textile est ensuite repliée puis pressée à chaud pour former une bande d'étiquettes, l'impression se faisant après le pressage à chaud. Un tel procédé n'est pas très précis pour positionner l'impression et antenne, ce qui donne un résultat peu satisfaisant.

Le document US 2015/0278671 propose une solution pour produire des étiquettes sur une bande textile. Dans ce document l'impression ainsi que la pose de l'antenne est réalisée simultanément lors du tissage. Néanmoins, la réalisation d'antennes tissées ne permet pas de réaliser un test électronique individuel de chaque étiquette tant qu'elles sont en bande. L'utilisation d'autres techniques d'impression et de pose d'antennes nécessitent une simultanéité des deux opérations qui est complexe et couteuse à mettre en œuvre et ne permet pas d'obtenir un résultat satisfaisant.

En outre, tout produit textile comporte par ailleurs au moins une autre étiquette contenant des informations sur ledit produit tel que par exemple la composition, la marque, le lieu de production, la température de lavage ou autre. La fixation sur un produit textile d'une étiquette d'information et d'une étiquette électronique nécessite deux opérations de fixation qui entrainent une multiplication des coûts.

Afin de réaliser une seule opération de fixation d'étiquette pour fixer l'étiquette d'information et l'étiquette électronique, il est connu d'intégrer une étiquette électronique dans ou sur une étiquette d'information. Cependant, la solution consistant à poser une étiquette RFID sur une bobine de tissu porteur ayant déjà des repères répétitifs est lourde à mettre en œuvre car cette pose d'étiquette est souvent faite manuellement et coûteuse en matériaux utilisés. Classiquement, le report de l'étiquette RFID soit par thermocollage sur la bobine, soit par insertion dans des pochettes aménagées qui seront scellées généralement par couture avant d'être appliquée sur le produit textile à marquer.

Par ailleurs, il est connu d'imprimer sur une étiquette RFID en papier et de l'utiliser sur des produits textiles. En effet, l'intégration d'une antenne et d'un circuit intégré dans un support papier peut se faire avec une épaisseur finale de quelques centaines de micromètres. Une telle étiquette papier ne présente pas de relief important ce qui permet de réaliser dessus une impression de qualité. Les étiquettes en papier ont en outre un faible coût de fabrication. Néanmoins, les étiquettes RFID en papier ne peuvent être utilisées sur des textiles que pour assurer un suivi jusqu'à la vente du produit textile. En effet, les contraintes de lavages répétés, de pression de séchage, et de produits chimiques détruisent ce type d'étiquette dès les premiers cycles de lavage.

Il existe donc un besoin pour réaliser de manière simple et à moindre coût des étiquettes textiles électroniques d'identification permettant d'assurer le suivi de produits textiles durant leur utilisation tout en permettant de réduire les coûts de fabrication des produits textiles.

### Résumé de l'Invention

L'invention propose une solution qui combine une étiquette RFID et une étiquette imprimée de bonne qualité à bas coût. A cet effet, il est prévu de réaliser des étiquettes imprimées intégrant un module électronique d'identification dans un même procédé de fabrication en utilisant des marques de repérage qui permettent de synchroniser les différentes étapes de fabrication.

Selon un mode préféré de réalisation, l'invention fournit un procédé de fabrication d'une bande d'étiquettes électroniques de radio-identification qui comporte les étapes consistant à :
- fournir une bande de tissu à partir d'un rouleau de tissu, ladite bande de tissu comportant des marques de repérage pour indiquer une zone de séparation de deux étiquettes adjacentes ;
- placer une antenne amplificatrice par couture ou broderie comportant au moins une boucle au centre de laquelle est placé le module électronique de radio-identification, ledit placement d'antenne amplificatrice se faisant par rapport à l'une des marques de repérage ;
- pour chaque étiquette, placer un module électronique de radio-identification sur une face opposée à la face comprenant les marques de repérage en positionnant ledit module par rapport à l'une des marques de repérage;
- recouvrir le module électronique par une bande de maintien ;
- rendre solidaire la bande de tissu et la bande de maintien ;
- imprimer des informations sur une zone d'impression située sur la face comportant les marques de repérage, la zone d'impression d'une étiquette étant par rapport à une marque de repérage.

Grâce aux marques de repérage, il est possible de synchroniser les différentes étapes de fabrication. Les antennes et modules électroniques sont placés par rapport à ces marques de repérage. L'impression des informations sur chaque étiquette est également repérée par rapport aux marques de repérage, ce qui permet de produire l'ensemble dans un même procédé de fabrication lors de différentes étapes dont l'ordre importe peu et donc de réduire les coûts. En outre les marques de repérage permettent également de faciliter un repérage d'étiquette pour une machine de placement d'étiquettes.

De manière préférée, l'étape consistant à imprimer la zone d'impression peut être réalisée en même temps que l'étape consistant à imprimer les marques de repérage.

Selon un mode de réalisation particulier, une couche adhésive thermoplastique est disposée entre la bande de tissu et la bande de maintien et dans lequel l'étape consistant à rendre solidaire la bande de tissu et de la couche de maintien est réalisée par pressage à chaud de l'ensemble formé de la bande de tissu, la couche adhésive et de la couche de maintien.

Selon un mode alternatif, les marques de repérage peuvent être imprimées ou brodées après avoir assemblé la bande de tissu avec la couche adhésive et avant de placer le module de radio-identification.

Pour faciliter un repérage d'étiquette défectueuse pour une machine de placement, le procédé peut comporter une étape pour tester électriquement le fonctionnement de chaque étiquette et/ou vérifier la conformité de l'impression, et une étape pour marquer les étiquettes considérées défectueuse après les avoir testées et/ou vérifiées.

Pour faciliter un maintien en position dans une machine de positionnement d'étiquettes, le procédé peut comporter une étape de dépose d'un adhésif temporaire sur la face opposée à la face imprimée.

Selon un autre mode de réalisation l'invention fournit un ensemble d'étiquettes électroniques de radio-identification destiné à une machine de placement automatique d'étiquettes sur textile obtenu par le procédé de fabrication conforme au premier aspect de l'invention et constitué sous la forme d'une bande d'étiquettes comprenant une bande de tissu et une bande de maintien rendues solidaires l'une de l'autre afin de maintenir des modules électroniques de radio-identification placés entre elles, la bande de tissu comprenant une face imprimée. La face imprimée comporte des marques de repérages délimitant chaque étiquette de ladite bande. Des antennes amplificatrices sont cousues ou brodées sur ladite bande d'étiquettes, chaque antenne étant couplée à un module électronique. Chacun des modules de radio-identification est placé entre deux marques de repérage successives.

Pour améliorer la robustesse et la souplesse des antennes, les antennes amplificatrices peuvent être réalisées à l'aide d'un câble comportant une multitude de brins.

Afin de permettre un déchirement contrôlé de l'étiquette, des prédécoupes peuvent être réalisées entre les marques de repérage afin de permettre une séparation de l'étiquette en deux parties après que celle-ci soit cousue. Préférentiellement, chaque prédécoupe peut être localisée à proximité d'une zone destinée à recevoir une couture afin de rompre en cas d'arrachage de l'étiquette lorsque celle-ci est cousue sur un produit textile. La zone destinée à recevoir une couture peut être placée dans une partie centrale de l'étiquette, de sorte qu'une partie de l'étiquette reste solidaire du produit textile après l'arrachage d'une autre partie.

Afin de permettre à une machine de placement de détecter plus facilement et ne pas poser des étiquettes défaillantes éventuellement présentes sur une bande d'étiquettes, une marque d'invalidation peut être placée sur chaque étiquette pour laquelle le module électronique est défaillant ou pour laquelle l'aspect visuel est non conforme. Ainsi, par étiquette défaillante, il est possible de considérer aussi bien un défaut fonctionnel du module électronique qu'un défaut de qualité concernant l'aspect visuelle de l'impression de l'étiquette. Selon un mode de réalisation, la marque d'invalidation peut être un trou. Selon un autre mode de réalisation, la marque d'invalidation peut être une impression prédéterminée.

Selon un mode de conditionnement préféré, l'ensemble d'étiquettes peut être fourni sous la forme d'un rouleau d'étiquettes électroniques de radio-identification.

Selon un autre aspect, l'invention fournit une machine de placement d'étiquettes électroniques de radio-identification à partir d'un ensemble d'étiquettes tel que précédemment défini. Ladite machine comporte un moyen de détection des marques de repérage pour pouvoir repérer et découper une étiquette sur une bande d'étiquettes afin de la coudre sur un morceau de tissu. La machine comporte un dispositif de détection configuré pour repérer une étiquette électronique ayant un module électronique défaillant. Lorsqu'un module électronique défaillant est détecté, l'étiquette électronique comportant ledit module électronique défaillant n'est pas cousue. Ainsi, il est possible de détecter et de ne pas poser les éventuelles étiquettes défaillantes présente dans l'ensemble d'étiquettes.

Selon un mode de réalisation, le dispositif de détection peut être un moyen optique qui repère une marque d'invalidation.

Selon un autre mode de réalisation, le dispositif de détection est un lecteur d'étiquette électronique sans contact qui lit une information d'identification émise par le module électronique de chaque étiquette et détecte un module électronique défaillant lorsque la lecture n'est pas possible ou est erronée.

Dans un but de suivi de produit textile durant sa production, la machine de placement peut comporter un lecteur d'étiquette électronique pour lire le contenu du module électronique placé en sortie de machine, après la couture de l'étiquette électronique, ledit lecteur transférant à destination d'une base de données l'information d'identification de l'étiquette conjointement avec un identifiant de ladite machine ainsi que la date et l'heure à laquelle la machine effectue la couture sur le produit textile.

Pour assurer un maintien entre une mise en place de l'étiquette et la couture de celle-ci, la machine de placement peut comporter un dispositif d'encollage qui dépose ou active une couche adhésive sur une étiquette avant de placer celle-ci sur le produit textile afin de la maintenir en position jusqu'à la couture de ladite étiquette.

Selon un dernier aspect, l'invention fournit un produit textile qui comporte une étiquette électronique provenant d'un ensemble d'étiquettes électroniques conforme au deuxième aspect de l'invention après avoir été découpé par une machine de placement selon les marques de repérage placées sur les bords de deux étiquettes adjacentes, ladite étiquette étant fixée audit produit par l'intermédiaire d'une couture.

Selon un placement astucieux de l'étiquette électronique dans un produit textile comportant un ourlet, le module électronique peut être placé à l'intérieur de l'ourlet, la couture fixant à la fois l'étiquette électronique et l'ourlet. Une prédécoupe peut être placée à proximité de la couture d'un côté opposé au module électronique de sorte que l'arrachage de la partie de l'étiquette dépassant de l'ourlet laisse le module électronique à l'intérieur dudit ourlet.

### Brève Description des figures

L'invention sera mieux comprise et d'autres caractéristiques et avantages de celle-ci apparaîtront à la lecture de la description suivante de modes de réalisation particuliers de l'invention, donnés à titre d'exemples illustratifs et non limitatifs, et faisant référence aux dessins annexés, parmi lesquels :
[Fig.1] montre une bande de fourniture de module électronique de radio-identification,
[Fig.2] détaille un module électronique de radio-identification,
[Fig.3] montre une première face d'une bande d'étiquettes électronique de radio-identification selon un premier mode de réalisation de l'invention,
[Fig.4] montre une deuxième face de la bande d'étiquettes électronique de radio-identification de la figure 3,
[Fig.5] montre une première face d'une bande d'étiquettes électronique de radio-identification selon un deuxième mode de réalisation de l'invention,
[Fig.6] montre une deuxième face de la bande d'étiquettes électronique de radio-identification de la figure 5
[Fig.7] illustre un début de procédé de fabrication d'une bande d'étiquettes électronique de radio-identification selon l'invention,
[Fig.8] illustre une alternative au procédé de fabrication d'une bande d'étiquettes électronique de radio-identification de la figure 7,
[Fig.9] illustre une fin de procédé de fabrication d'une bande d'étiquettes électronique de radio-identification selon l'invention,
[Fig.10] illustre des exemples de marquage d'étiquettes défectueuses d'une bande d'étiquettes électronique de radio-identification selon l'invention,
[Fig.11] illustre un premier mode d'utilisation d'une étiquette électronique de radio-identification réalisée selon l'invention,
[Fig.12] illustre un deuxième mode d'utilisation d'une étiquette électronique de radio-identification réalisée selon l'invention,

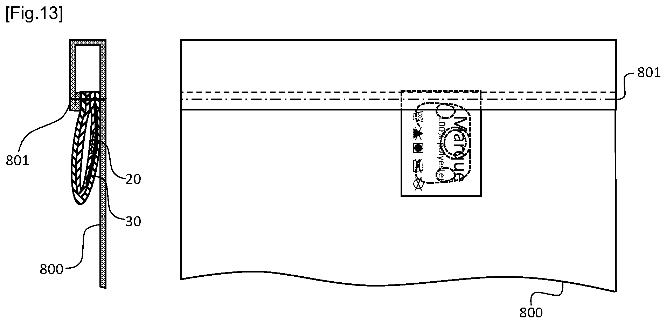

[Fig.13] illustre un troisième mode d'utilisation d'une étiquette électronique de radio-identification réalisée selon l'invention

### Description détaillée

Un mode de réalisation d'étiquettes électroniques de radio-identification va à présent être détaillé dans la description qui va suivre. Cependant, au vu des dimensions des différents éléments constituant l'invention, les figures annexées ne sont pas réalisées à l'échelle afin de pouvoir montrer certains détails qui seraient difficilement perceptibles si l'échelle était respectée. En outre, afin de simplifier les détails d'explications, des mêmes références sont utilisées pour désigner des éléments similaires ou identiques se trouvant dans des situations différentes.

Les modules électroniques de radio-identification, également désignés par « modules RFID », sont connus et de nombreux modes de réalisation sont compatibles avec la présente invention. Le mode de réalisation décrit dans le présent document est donné à titre d'exemple et peut être remplacé par tout autre type de module intégrant sa propre antenne de réception.

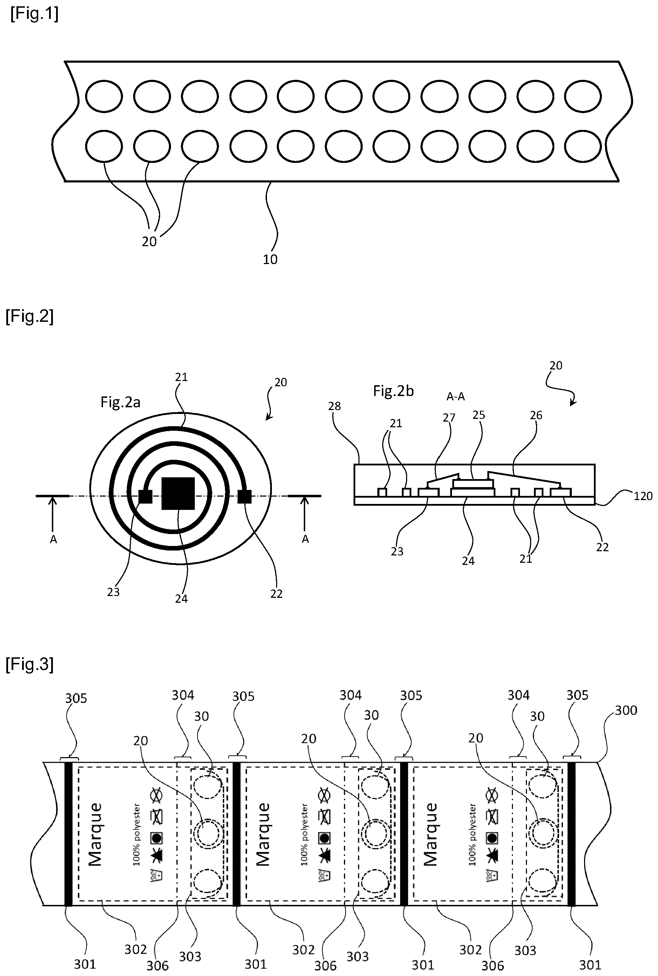

Pour des besoins de fabrication, on utilise préférentiellement des modules réalisés en bande et conditionné en rouleau. La figure 1 illustre une bande 10 en matériau diélectrique souple sur laquelle des modules RFID 20 ont été construits. Le matériau diélectrique est par exemple un époxy, un polyimide, ou encore un poly téréphtalate d'éthylène, communément dénommé PET. Les modules RFID 20 sont extraits par poinçonnage de la bande 10 de sorte à séparer chaque module de la bande 10 puis à saisir ledit module par un élément de préhension pour être placé sur une étiquette électronique de radio-identification conforme à l'invention comme il sera expliqué plus loin.

La figure 2 détaille un module RFID 20 réalisé sur la bande 10. La figure 2a montre une partie de la bande diélectrique 10 qui supporte un module RFID 20 et la figure 2b montre un module RFID 20 en coupe transversale selon le plan A-A indiqué sur la figure 2a. Pour chaque partie supportant un module RFID 20, une couche conductrice est déposée puis gravée ou imprimée, selon une technique connue, afin de définir une antenne magnétique 21 munie de deux plots de connexion 22 et 23 destinés à être reliés à une puce 25. Selon un mode préféré, une zone de renfort 24 est également prévue dans la couche conductrice pour recevoir la puce 25.

La figure 2b montre un module RFID 20 selon la coupe A-A où l'on peut voir que la puce 25 a été déposée sur la zone de renfort 24. Des fils de liaison 26 et 27 relient deux bornes de la puce 25 respectivement aux deux plots de connexion 22 et 23. Les fils de liaisons 26 et 27 sont par exemple des fils d'or auto-soudés sur la puce 25 et écrasés sur les plots de connexion 22 et 23 selon une technique connue. La puce 25 est un circuit intégré comportant un numéro d'identification unique et au moins une interface de communication permettant à la fois de recevoir une énergie de fonctionnement à partir d'un champ électromagnétique capté par l'antenne et de moduler ledit champ pour émettre son numéro d'identification. Pour des applications plus complexes qu'une simple identification, la puce 25 peut comporter un microcontrôleur et une mémoire non volatile électriquement programmable. Une couche de résine 28 est ensuite déposée ou surmoulée sur la bande 10 définissant ainsi la partie 120 correspondant au module RFID 20 qui sera ultérieurement découpé par poinçonnage. La couche de résine 28 est réalisée à l'aide d'une résine polymérisable aux ultraviolets ou par réticulation thermique.

Bien entendu de très nombreuses variantes de réalisation d'un module RFID son possibles. A titre d'exemple, un tel module RFID peut être réalisé avec une technique dite « Flip-Chip », de l'anglais « puce retournée », où la puce 25 est retournée afin que certaines de ses bornes de contact viennent en regard avec des plots de contact de l'antenne afin de les reliés via une soudure directe. Le module peut comporter des pastilles de renfort sur l'une ou les deux faces afin de le rendre plus résistant aux contraintes extérieures. L'important pour l'invention étant de disposer des modules RFID de petites dimensions, par exemple ayant un diamètre inférieur à 15 mm et une épaisseur inférieure à 3 mm, pour pouvoir respectivement les intégrer dans des étiquettes électroniques de radio-identification selon l'invention. Plus un module est petit, plus celui-ci est dissimulable dans le produit textile auquel il est destiné.

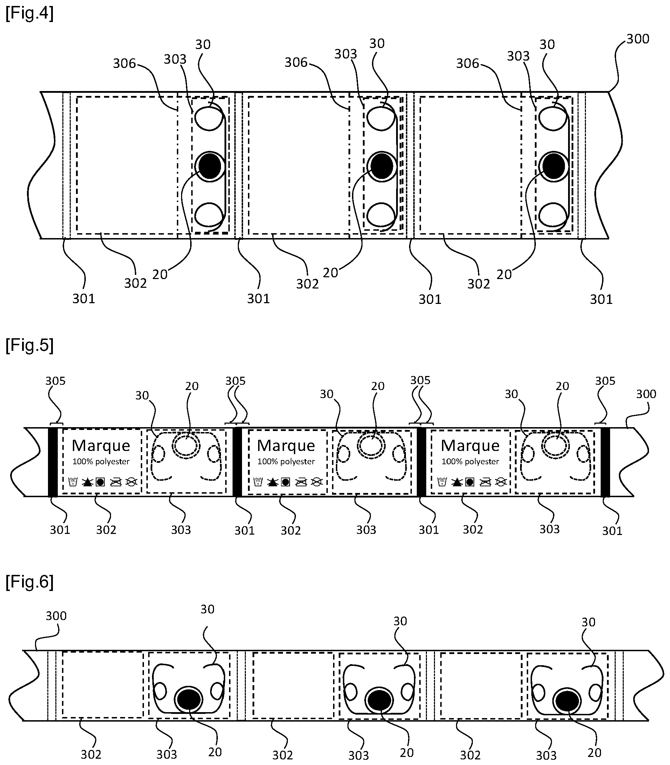

Les figures 3 et 4 montrent un ensemble d'étiquettes électroniques de radio-identification conditionné sous la forme d'une bande 300 conforme à l'invention selon un premier mode de réalisation préféré. La figure 3 montre une face imprimée de la bande 300 et la figure 4 montre la face opposée qui comporte des modules RFID 20 et des antennes amplificatrices 30 qui permettent d'augmenter la portée des modules RFID 20.

Les figures 5 et 6 montrent un ensemble d'étiquettes électroniques de radio-identification conditionné sous la forme d'une bande 300 conforme à l'invention selon un deuxième mode de réalisation préféré. La figure 3 montre une face imprimée de la bande 300 et la figure 4 montre la face opposée à cette dernière qui comporte des modules RFID 20 et des antennes amplificatrices 30.

Le premier mode de réalisation propose des étiquettes destinées à être posées à plat alors que le deuxième mode de réalisation propose des étiquettes destinées à être pliées lors de la pose. Les différences entre ces deux modes sont principalement des différences de dimensionnement, néanmoins quelques alternatives sont proposées en fonction du mode de réalisation.

Pour les deux modes de réalisation, une face de la bande d'étiquette 300 est imprimée comme indiqué sur les figures 3 et 5. La face imprimée comporte des marques de repérage 301

Ces marques de repérage 301 servent de repère de positionnement de la bande 300 pendant sa fabrication. Ces marques de repérage 301, sont utilisées, d'une part, comme repère de positionnement de zones d'impression 302 qui sont placées sur tout ou partie de chaque étiquette, et, d'autre part, comme repère de positionnement de zones de communication 303. En outre, les marques de repérage 301 peuvent servir postérieurement au placement d'un étiquette sur un vêtement ou un autre produit textile, par exemple pour indiquer une zone de séparation entre deux étiquettes successives. La longueur d'une étiquette électronique est définie par la distance séparant deux marques de repérage successives, la largeur de l'étiquette étant définie par la largeur de la bande 300. Selon un mode de réalisation préféré, les marques de repérage 301 sont placées sur les bords de deux étiquettes adjacentes afin de la délimiter et d'indiquer une zone de découpe des deux étiquettes.

Les zones d'impression 302 sont des zones recevant l'impression des informations que l'on désire montrer sur l'étiquette d'un vêtement ou autre produit textile manufacturé afin d'informer un utilisateur, par exemple de la composition du produit, des conditions d'utilisation et de lavage ou toute autre information destinée à l'utilisateur. Les zones de communication 303 correspondent à des zones de placement recevant chacune un module RFID 20 une antenne amplificatrices 30.

Sur les figures 3 et 4, les zones d'impression 302 s'étendent sur la totalité de chaque étiquette alors que les zones de communication 303 sont localisées à proximité des marques de repérage 301. Toutefois, il n'est pas nécessaire d'imprimer sur la totalité des zones d'impression. Sur les figures 5 et 6, les zones d'impression 302 et de communication 303 sont non chevauchantes car les étiquettes sont destinées à être pliées en deux. Dans les deux modes de réalisation représentés, les zones d'impression 302 et de communication 303 s'étendent sur toute la largeur de l'étiquette. Selon une variante non représentée, les zones d'impression 302 et de communication 303 peuvent ne pas s'étendre sur toute la largeur des étiquettes électroniques afin de réserver une zone vierge sur les bords latéraux des étiquettes.

Pour des raisons d'utilisation, il est possible de prévoir sur chaque étiquette une zone de séparation 304 et/ou une ou deux zones de garde 305 qui peuvent correspondre à différentes zones de couture d'une étiquette sur un vêtement. Afin d'autoriser une couture d'une étiquette, une zone de séparation 304 et une ou des deux zones de garde 305 de ladite étiquette s'étendent sur la longueur de l'étiquette sur une distance ou une longueur suffisante pour permettre le passage d'un fil de couture traversant ladite zone de séparation 304 ou de garde 305 sur la largeur de l'étiquette électronique. Préférentiellement, on évitera d'imprimer sur ces zones de séparation 304 et de garde 305 afin d'éviter d'avoir un élément imprimé non ou peu lisible. Egalement de manière préférée, ces zones de séparation 304 ou de garde 305 ne pénètrent pas la zone de communication 303 afin d'éviter d'endommager l'antenne amplificatrice 30 ou le module RFID 20. Selon une alternative, les zones de séparation et de garde peuvent pénétrer la zone de communication mais doivent être placées de manière à garantir une distance suffisante entre le module RFID 20 et une couture.

La figure 3 montre des zones de séparation 304 qui s'étendent sur la largeur de chaque étiquette et séparent une zone de communication 303 du reste de l'étiquette. Ces zones de séparation 304 permettent de coudre l'étiquette électronique dans une partie centrale de ladite étiquette permettant ainsi d'avoir le module RFID 20 à proximité d'une couture. En outre, une prédécoupe 306 est réalisée sur la largeur de l'étiquette à proximité d'une extrémité d'une zone de séparation 304. La prédécoupe 306 est destinée à former une zone de rupture de l'étiquette permettant de couper une partie de l'étiquette tout en laissant l'autre partie de l'étiquette solidaire du produit textile. Chaque étiquette de la figure 3 comporte une zone de garde 305 qui englobe une marque de repérage 301 et déborde de chaque côté de ladite marque de repérage de sorte que la couture puisse être réalisée sur un côté de l'étiquette aux alentours de ladite marque de repérage, maximisant ainsi la zone utile d'impression.

De manière alternative, la prédécoupe 306 peut être placée à n'importe quel endroit de l'étiquette dès lors que l'on souhaite une séparation d'une partie de l'étiquette après que celle-ci soit posée sur un produit textile. Selon un mode de réalisation préféré décrit plus loin dans la description, la prédécoupe 306 peut permettre de déchirer une partie visible de l'étiquette tout en laissant une partie cachée, par exemple une partie contenant le module RFID 20, solidaire du produit textile sur lequel l'étiquette est cousue. Selon un autre mode de réalisation la prédécoupe 306 peut servir à retirer une partie seulement de l'étiquette, par exemple lors de la vente d'un produit. Selon un autre mode réalisation, la partie arrachable de l'étiquette peut être la partie comportant le module RFID.

Dans le cas d'étiquettes destinées à être pliées en deux, la couture s'effectue sur les deux bords de l'étiquettes et il est donc préférable de prévoir une zone de garde 305 de chaque côté d'une étiquette. La figure 5 montre des zones de gardes 305 partant du milieu des marques de repérage 301 et s'étendant de chaque côté.

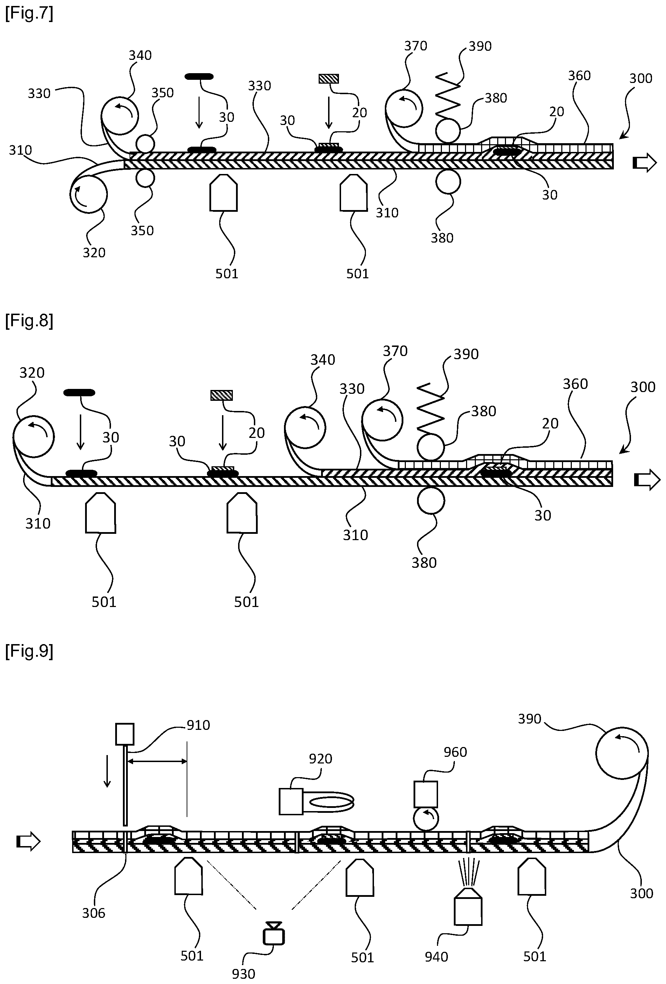

Quel que soit le mode réalisation, la fabrication de la bande 300 d'étiquettes électroniques de radio-identification est illustrée par les figures 7 à 9. La bande 300 est constituée d'une bande de tissu 310 recouverte par une couche de maintien 360 rendue solidaire de la bande de tissu 310 par une couche adhésive 330. La bande de tissu 310 et la couche de maintien 360 enceignent les modules RFID 20 et les antennes amplificatrices 30.

La figure 7 illustre un premier exemple du début du procédé de fabrication de la bande 300. Selon ce premier exemple, la bande de tissu 310, fournie par un premier rouleau 320, est rendue solidaire de la couche adhésive 330, fournie par un deuxième rouleau 340, par laminage à chaud en début de procédé.

A titre d'exemple non limitatif, la couche adhésive 330 peut être un matériau thermoplastique tel qu'un polyuréthane thermoplastique, connu également sous l'acronyme TPU. En variante, un tel matériau thermoplastique 330 peut être sélectionné parmi des polyuréthanes thermoplastiques, des polyphénylènes oxydes, des polyamides, des polyacétates, des polyéthylènes, des polypropylènes, des polyoléfines ou des Ethylènes-Acétates de Vinyles, avantageusement conditionnés sous forme de films.

Plus généralement, on entendra, au sens de l'invention, par « matériau thermoplastique », tout matériau ou polymère susceptible d'être activé de manière répétée sous l'effet d'une augmentation de température, ladite température dépassant une température de fusion déterminée, par exemple de l'ordre de 150°C à 210°C. L'activation d'un tel matériau traduit un changement d'état de l'état solide (à température ambiante) à un état liquide visqueux. Ainsi, lorsque l'on atteint ou dépasse une température de fusion du matériau, ce dernier se ramollit et devient collant.

L'épaisseur de la couche de matériau thermoplastique est de l'ordre de quelques dizaines de micromètres à quelques centaines de micromètre pour conserver une grande souplesse à l'étiquette finale. A titre d'exemple, le film de matériau thermoplastique est compris entre 25 micromètres et 250 micromètres et préférentiellement de l'ordre de 100 micromètres.

La bande de tissu 310 est réalisée en coton, en nylon, en viscose, en polyester ou à partir de toute autre matière synthétique communément utilisée pour réaliser des étiquettes de marquage de vêtement destinées à indiquer, la marque, la taille, la composition du vêtement, les indications de lavage ou d'entretien. La bande de tissu 310 est fournie en rouleau.

Pour réaliser l'assemblage de la bande de tissu 310 et de la couche adhésive 330, les premier et deuxième rouleaux 320 et 340 sont déroulés avec une même vitesse déroulement de la bande de tissu 310 et du film de matériau thermoplastique formant la couche adhésive 330. La bande de tissu 310 et le film de matériau thermoplastique formant la couche adhésive 330 sont ensuite guidés entre une paire de rouleaux 350 en miroir l'un de l'autre, assurant une fonction de pressage, de chauffage et de tractage de l'assemblage, réalisant ainsi un laminage à chaud. Durant le laminage à chaud, le matériau thermoplastique est porté à une température proche de sa température de fusion de sorte qu'il se ramollisse et pénètre partiellement la bande de tissu 310, rendant ainsi solidaires ladite bande de tissu 310 et la couche adhésive 330 et indissociables l'une de l'autre.

Suivant le mode de réalisation décrit, le reste des étapes d'assemblage se fait immédiatement après l'assemblage de la bande de tissu 310 et de la couche adhésive 330. Selon l'invention, l'impression des marques de repérage 301 sur la bande de tissu 310 est réalisée avant les autres les autres étapes de fabrication car les marques de repérage 301 servent à synchroniser la pose des différents éléments constitutifs de la bande d'étiquettes 300. Seule l'étape d'assemblage de la couche adhésive 330 sur la bande de tissu 310 peut être réalisée préalablement à l'impression du tissu. Dans ce cas, les marques de repérage 301 sont imprimées sur la bande de tissu assemblée sur la face opposée au matériau thermoplastique avant de réaliser les autres étapes de fabrication.

L'impression des marques de repérage 301 peut se faire par toute technique d'impression tel que, par exemple, impression par rotative, par transfert thermique, par jet d'encre ou tamponnage. De plus, par impression, il faut comprendre une impression dans un sens très large, ces marques de repérage 301 pouvant également être imprimées par broderie ou directement lors du tissage de la bande de tissu 310, l'important étant que la bande de tissu 310 comporte les marques de repérage en début du procédé de fabrication. Préférentiellement, l'impression des marques de repérage 301 peut se faire en même temps que l'impression des informations sur le reste de la zone d'impression afin de n'avoir qu'une seule étape d'impression.

En variante, l'impression des informations dans la zone d'impression peut être réalisée en fin de fabrication de la bande 300 d'étiquettes électroniques. Dans ce cas, les techniques d'impression peuvent être limitées à des procédés d'impression compatibles avec la présence du module RFID 20 tels que, par exemple, une impression par jet d'encre ou par tamponnage. Egalement, l'impression des informations peut se faire par broderie, notamment lorsque qu'il s'agit d'un logo de marque. Les zones d'impression étant repérées par rapport à une ou plusieurs marques de repérage 301, cela qui permet, entre autres, d'éviter d'imprimer sur la zone de communication pour s'affranchir d'éventuels défauts d'impression liés aux surépaisseurs.

Après impression des marques de repérage 301 sur une bande 300 comportant une bande de tissu 310 assemblée avec la couche adhésive 330, la bande 300 est déroulée devant des machines ou postes de placement et de fixation correspondant chacune à une étape de fabrication. Pour des raisons de représentation, plusieurs postes ont été représentés sur la bande, chaque poste étant associé à un détecteur de positionnement 501. D'une manière pratique, un seul détecteur de positionnement 501 peut être utilisé pour plusieurs postes réalisant plusieurs opérations au même emplacement à l'aide de machines ou outils travaillant de manière successive sur un même positionnement. Le détecteur de positionnement 501 détecte une marque de repérage 301 et provoque l'arrêt du défilement de la bande 300 lorsque celle-ci est positionnée de manière optimale par rapport aux machines ou postes, par exemple en stoppant les rouleaux 350 et d'autres moyens de traction non représentés.

Un module RFID 20 n'est que très peu flexible de par sa constitution. Pour une étiquette textile, il est préféré d'avoir un module le plus petit possible en raison du caractère flexible de l'étiquette et donc de réduire la zone non flexible de ladite étiquette. Cependant, plus le module RFID est petit, plus le flux du champ électromagnétique reçu par l'antenne 21 est faible. L'inconvénient qui en découle est de réduire la distance de lecture ou de nécessiter un lecteur avec une puissance de champ électromagnétique importante pour pouvoir lire les informations d'identification du module RFID 20. Pour augmenter le champ électromagnétique au niveau du module RFID 20, il est préféré d'utiliser une antenne amplificatrice 30 qui comporte avantageusement au moins une boucle à l'intérieur de laquelle le module RFID 20 est placé, la boucle permettant d'augmenter le couplage entre le module RFID 20 et l'antenne amplificatrice 30.

L'utilisation de l'antenne amplificatrice 30 a pour effet de concentrer les lignes du champ électromagnétique au niveau du module RFID 20. Préférentiellement, l'antenne amplificatrice 30 comporte d'autre boucles placées dans la zone de communication 303 permettant de capter le champ électromagnétique sur une surface plus importante afin de le concentrer sur le module RFID 20. Le procédé de fabrication d'une étiquette électronique de radio-identification est décrit avec la pose d'une antenne amplificatrice 30.

Selon un mode de réalisation, l'antenne amplificatrice 30 est réalisée par broderie ou couture sur la bande 300 dans la zone de communication 303. L'antenne amplificatrice 30 est formée à l'aide d'un fil conducteur isolé par une machine à broder, ou machine à coudre, qui utilise ce fil pour le broder, ou le coudre, directement sur la bande dans la zone de communication 303 selon une configuration comportant au moins une boucle. Le positionnement de la bande devant l'outil de couture ou de broderie étant réalisé grâce aux marques de repérage 301, l'antenne amplificatrice 30 se trouve idéalement positionnée par rapport auxdites marque de repérage 301.

Selon une variante, l'antenne amplificatrice 30 est réalisée sous forme d'un câble comportant une multitude de brins. L'utilisation d'un câble permet d'éviter une coupure de l'antenne amplificatrice 30 lorsqu'un point de couture est réalisé sur le conducteur de l'antenne. En effet, l'aiguille cassera quelques brins mais pas la totalité, ce qui permet de conserver une fonction d'antenne même si le câble est endommagé.

L'antenne 30 étant positionnée, un module RFID 20 est ensuite déposé dans la zone de communication 303 au niveau d'une boucle de l'antenne amplificatrice 30. Une fixation temporaire du module peut être assurée par chauffage de la zone de dépose. Le chauffage de la zone de dépose ramollit la couche adhésive 330 lui permettant de maintenir le module RFID 20. Le maintien réalisé par simple chauffage de la couche adhésive 330 est suffisant pour maintenir en place le module RFID 20 pendant la fabrication mais n'est pas suffisant pour réaliser un maintien résistant aux contraintes d'utilisation d'une étiquette électronique.

Une étape suivante consiste à dérouler une couche de maintien 360 fournie à partir d'un rouleau 370 sur la bande 300. La Couche de maintien 360 est un tissu tissé ou non tissé réalisée en coton, en nylon, en viscose, en polyester ou à partir de toute autre matière synthétique communément utilisée pour réaliser des étiquettes de marquage de vêtement.

La couche de maintien 360 est guidée avec la bande 300 entre une paire de rouleaux 380 en miroir l'un de l'autre, assurant une fonction de pressage, de chauffage et de tractage de l'assemblage, réalisant ainsi un laminage à chaud de la bande 300. Le rouleau 380 supérieur est mobile en translation perpendiculairement à la surface de la bande tout en étant pressé par un moyen de pression 390 qui permet au rouleau 380 supérieur de s'écarter du rouleau 380 inférieur lors du passage de surépaisseur de la bande 300 correspondant au module RFID 20 et à l'antenne 30. Durant le laminage à chaud, le matériau thermoplastique de la couche adhésive 330 est porté à sa température de fusion de sorte qu'il se ramollisse et pénètre partiellement la bande de maintien 360, rendant celle-ci solidaire est indissociable de la bande 300.

La figure 8 illustre une variante de fabrication aux étapes de la figure 7. Dans cette variante la bande de tissu 310 imprimée avec les marques de repérage 301 reçoit directement l'antenne 30 et le module RFID 20. Afin d'être temporairement maintenu sur la bande de tissu 310, le module RFID 20 comporte une couche thermoadhésive qui est chauffée lors de sa dépose sur la bande de tissu 310. L'ensemble composé de la bande de tissu 310, du module RFID 20 et de l'antenne 30 est ensuite recouvert par la couche adhésive 330 et la couche de maintien 360, ledit ensemble étant guidé par la paire de rouleau 380 pour être laminé à chaud.

En variante, dans ce deuxième exemple, il est possible d'utiliser des modules qui ne comportent pas de couche thermoadhésive. Dans ce cas, le procédé de fabrication peut prévoir la dépose d'une colle temporaire sur la couche de tissu 310, au niveau de l'endroit où doit être déposé le module RFID 20. A titre d'exemple, la colle temporaire peut être un polymère d'acétate de vinyle pulvérisé localement ou déposé en continu à l'aide d'un rouleau ou d'un pinceau, ou encore une fine bande d'adhésif sensible à la pression de type PSA, par exemple une bande de 3 à 5 mm de large.

Le pressage à chaud de la couche de maintien 360 sur la bande de tissu 310 avec une couche adhésive 330 en matériau thermoplastique constitue un moyen préféré pour rendre ces deux couches solidaires. Toutefois d'autres méthodes peuvent être utilisée sans sortir du cadre de l'invention dès lors que celles-ci permettent d'assurer une bonne fixation de la couche de maintien 360 sur la bande de tissu 310.

Les bandes 300 résultantes des procédés correspondant aux figures 7 et 8 sont sensiblement identiques. La principale différence consiste en effet au positionnement de la couche adhésive 330 au niveau du module RFID 20 et de l'antenne 30, ce qui est peu important pour le résultat final. A l'issue du pressage à chaud, un refroidissement peut être réalisé par pressage à l'aide d'un outil refroidi en température ou par une soufflerie située sur le trajet de déroulement de la bande 300 avant de réaliser les étapes du procédé illustrées à l'aide de la figure 9.

Dans le cas où une prédécoupe 306 est souhaité, un détecteur de position 501 permet d'arrêter le défilement de la bande 300 lors de la détection d'une marque de repérage 301 en arrêtant les moyens de traction. La prédécoupe 306 peut être réalisée par exemple par poinçonnage à l'aide d'un ou plusieurs poinçon 910 positionné à une distance d par rapport au détecteur de position 501. En variante, la prédécoupe peut être réalisée par un laser de puissance, par exemple un laser au CO2 de 100W. Ainsi une prédécoupe 306 peut être positionnée à une distance d par rapport à une marque de repérage 301. Si aucune prédécoupe n'est souhaitée, cette étape n'est pas nécessaire.

Bien que les modules RFID 20 puissent avantageusement être testés avant leurs placements sur une bande 300, l'opération de pressage à chaud peut entraîner une contrainte mécanique ou thermique sur les modules RFID 20 qui peut endommager certains d'entre eux. En outre, un fil d'une antenne amplificatrice 30 peut être cassé lors de la fabrication de la bande 300 rendant l'étiquette électronique défectueuse. La livraison des étiquettes en rouleau est destinée à une machine de placement automatique d'étiquettes sur textile. Il est préférable d'éviter le placement d'une étiquette défectueuse rendant ledit textile non traçable. A cet effet, il convient de pouvoir détecter les étiquettes défectueuses au niveau de la machine de placement d'étiquettes sur textile.

En outre, dans certains cas, il est également possible que l'impression ne soit pas de bonne qualité. Ce peut être le cas lorsque la bande de tissu a fait l'objet d'un raboutage et comporte une zone de surépaisseur non prévue. Egalement, lorsque la zone d'impression 302 est superposée avec la zone de communication 303, l'impression peut parfois être altérée par l'antenne 30 ou le module RFID 20. Si le procédé de fabrication comporte des risques de forte altération de l'impression des informations utilises, il convient de repérer les étiquettes défectueuses pour lesquelles l'impression n'est pas d'une qualité suffisante.

Deux alternatives de réalisation sont possibles. Une première solution consiste à marquer les étiquettes défectueuses préalablement à l'enroulement de la bande 300 d'étiquettes électroniques sur un rouleau 390. Une étape de test peut consister à tester électriquement le fonctionnement de chaque étiquette produite sur une bande 300 et éventuellement à vérifier la conformité de l'impression. Un détecteur de position 501 permet d'arrêter le défilement de la bande 300 lorsque la marque de repérage 301 est positionnée de manière adéquate par rapport à un appareillage de test. L'appareillage de test peut comprendre un lecteur RFID 920 positionné par rapport à un détecteur de position en fonction de la position d'un module RFID 20 par rapport à une marque de repérage 301. Le lecteur RFID 920 réalise une lecture du module RFID 20 qui se trouve à proximité de lui. Si la lecture n'est pas concluante, par exemple si le module ne répond pas, fait une réponse erronée ou répond avec un niveau de signal faible alors l'étiquette est considérée défectueuse.

L'appareillage de test peut comporter une caméra 930 qui est positionnée pour prendre une image de la zone d'impression 302 afin de la comparer avec une image de référence. Si la comparaison entre l'image de référence et l'image capturée par la caméra 930 présentent des différences au-delà d'un certain seuil alors l'étiquette est considérée défectueuse.

Lorsqu'une étiquette est considérée défectueuse, celle-ci est marquée à l'aide d'un dispositif de marquage 940. Le marquage peut se faire de différentes manières mais une marque d'invalidation 950 est toujours positionnée par rapport à une marque de repérage 301. Pour positionner la marque d'invalidation 950, la bande 300 est arrêtée lorsqu'un détecteur de position repère une marque de repérage 301.

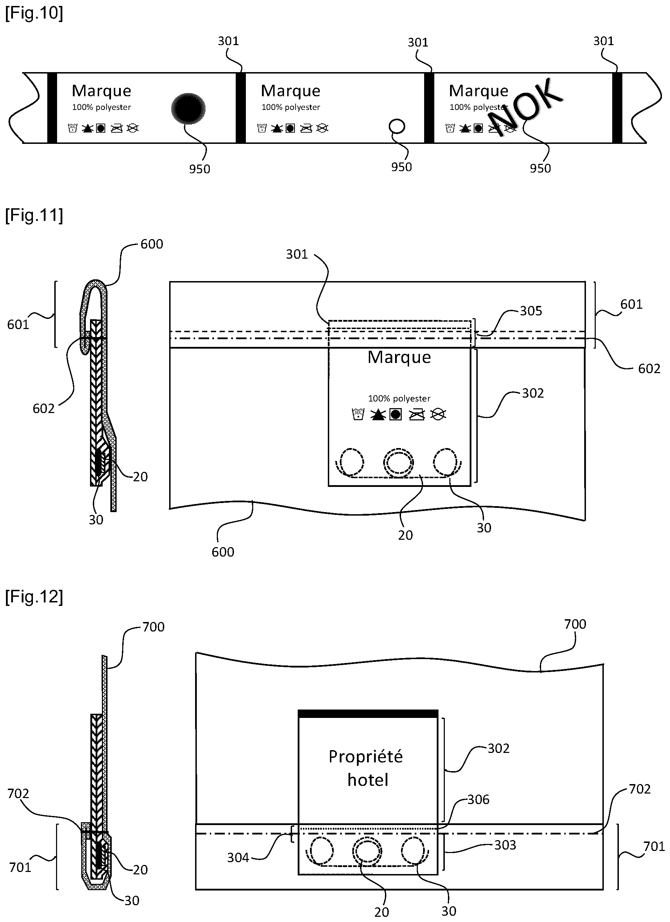

A titre d'exemple, la figure 10 montre différents types de marque de repérage 950. Sur l'étiquette de gauche, la marque d'invalidation 950 est une simple tache d'encre par exemple de couleur rouge afin d'être facilement repérable par un détecteur optique situé sur une machine de placement. En variante, une telle marque peut être réalisée sur la totalité d'une face de la bande correspondant à une étiquette défectueuse. Sur l'étiquette de droite de la figure 10, la marque d'invalidation 950 est une inscription « NOK » qui nécessite d'avoir une caméra sur le dispositif de placement pour repérer cette inscription. Pour les marques d'invalidation 950 de l'étiquette de gauche et de l'étiquette de droite, le dispositif de marquage est par exemple une tête d'impression par jet d'encre ou par laser. L'important est qu'une telle marque soit facilement repérable par un matériel approprié, tel que, par exemple, une caméra d'une machine de placement d'étiquettes.

Sur l'étiquette du milieu de la figure 10, la marque d'invalidation 950 est un trou réalisé par poinçonnage. L'utilisation d'un trou permet d'utiliser sur une machine de placement d'étiquettes sur textile un simple capteur optique à bas coût permettant de repérer un trou sur l'étiquette.

Quel que soit le type de marque d'invalidation 950 utilisé, lors du placement d'une étiquette par une machine de placement d'étiquettes, ladite machine de placement détecte sur chaque étiquette si une telle marque d'invalidation 950 est présente. Si la machine de placement détecte une marque d'invalidation 950, alors la machine de placement met au rebut l'étiquette défectueuse avant l'opération de placement sur le textile.

Une telle étape de test peut en outre permettre de mettre à jour certaines mémoires du composant électronique du module de radio-identification de chaque étiquette conditionnée en une bande 300. Cette étape permettant de discriminer les étiquettes opérationnelles permet ainsi de gérer et maîtriser la séquence des numéros de séries ou autres références uniques associées aux étiquettes électroniques de radio-identification.

Selon une deuxième solution, les étiquettes ne sont pas testées lors de la fabrication ou le test réalisé doit être remis en question suite à des manipulations qui auraient pu endommager des modules RFID après la fabrication. Dans ce cas, la machine de placement d'étiquettes peut comporter un lecteur d'étiquettes électroniques de radio-identification. La machine de placement effectue une lecture de d'identifiant de d'une étiquette juste avant de placer celle-ci. Si l'étiquette électronique répond et donne son identifiant alors la machine poursuit le positionnement de l'étiquette et la coud sur la pièce de tissu à laquelle elle est destinée. Si au contraire, l'étiquette électronique ne répond pas ou répond de manière erronée, celle-ci n'est pas cousue et elle est mise au rebut avant son placement.

Une autre étape optionnelle peut également être réalisée avant l'enroulage de la bande 300. Dans le but de rendre plus facile la manipulation de l'étiquette au moment de la coudre sur un produit textile, il peut être demande de disposer d'un adhésif temporaire sur l'étiquette électronique. A cet effet, un adhésif temporaire peut être déposé sur la face opposée à la face imprimée de la bande. Un outil 960 peut déposer en continue une bande d'un produit adhésif activable par pression ou thermiquement. Le produit peut être aussi déposé par pulvérisation ou simplement par la dépose d'un ruban de type PSA. La machine de placement de l'étiquette n'aura plus qu'à activer l'adhésif lors du placement de l'étiquette par simple pression ou par un chauffage ponctuel. Cette étape optionnelle peut en outre être intégralement réalisée par la machine de placement qui déposera elle-même l'adhésif sur l'étiquette ou sur le textile juste avant de l'activer.

L'utilisation d'un lecteur d'étiquettes électroniques de radio-identification sur la machine de placement permet en outre d'associer l'étiquette au produit textile sur lequel il est cousu. L'association aux produit textile peut par exemple se faire dans une base de données qui inscrit le numéro renvoyé par l'étiquette électronique au produit textile sur lequel l'étiquette est cousue. Une telle association permet en outre d'associer à chaque numéro d'étiquette dans la base de données le numéro de lot, la date de fabrication, l'identification du produit et éventuellement le client destinataire, ce qui permet de retracer la chaine de fabrication du produit textile sur lequel est posé l'étiquette électronique. A cet effet, selon une variante, la machine de placement comporte un lecteur d'étiquettes électroniques pour lire le contenu du module électronique (20) placé en sortie de machine, c'est-à-dire après la couture de l'étiquette sur le produit textile, indépendamment du fait qu'elle comporte ou non un lecteur d'étiquettes électroniques en entrée. Un lecteur d'étiquettes électroniques peut aussi se trouver à différents postes de fabrication après la pose d'une étiquette électronique conforme à l'invention. Ainsi, le ou les lecteurs d'étiquettes électroniques peuvent envoyer la référence de l'étiquette conjointement avec l'identification de la machine à laquelle elle est associée à une base de données. La base de données va ainsi enregistrer l'étiquette en l'associant au produit mais peut également enregistrer les identifiants de machine ainsi que la date et l'heure du passage en machine. Cela permet de retracer complétement la chaîne de fabrication d'un produit textile. Une base de données astucieusement placée dans le cloud permet de suivre un produit textile dont la fabrication se fait sur plusieurs sites et permet ainsi d'améliorer le suivi et la qualité des produits textiles comportant une telle étiquette.

La figure 11 illustre un premier procédé pour poser une étiquette selon l'invention sur un produit textile 600. Sur cette figure 11, l'étiquette est cousue à plat au niveau d'un ourlet 601 réalisé sur le produit textile 600. L'étiquette est ainsi placée entre deux pièces du produit textile 600, la marque de repérage 301 étant placée à l'intérieur de l'ourlet 601. Une couture 602 est ensuite réalisée sur l'ourlet en passant dans une zone de garde 305, de sorte que la zone d'impression 302 puisse être entièrement visible. La pose des indications graphiques et la pose de l'élément de radio-identification sont réalisées en une seule opération de placement d'étiquette sur le textile tout ayant été produit à bas coût.

La figure 12 illustre un deuxième procédé pour fixer une étiquette selon l'invention sur un produit 700. Cette deuxième façon est particulièrement adaptée pour des étiquettes destinées à du linge d'hôtel ou de tout autre établissement mettant du linge à disposition de ses clients, les étiquettes ayant pour but d'indiquer l'appartenance du linge à l'établissement dans la zone d'impression 302 de l'étiquette. Préférentiellement, des étiquettes disposant d'une prédécoupe 306 sont utilisées. Avantageusement, la zone de communication 303 d'une étiquette est placée à l'intérieur d'un ourlet 701 et la couture 702 est réalisée dans la zone de séparation 304 de l'étiquette. La prédécoupe 306 est placée entre la couture 702 et la zone d'impression 302. Quelqu'un qui s'approprierait indument le linge et qui voudrait retirer de manière malveillante l'étiquette tenterait de l'arracher. Une telle tentative d'arrachage d'étiquette entraînera une déchirure de ladite étiquette au niveau de la prédécoupe 306. La zone de communication 303 étant placée à l'intérieur de l'ourlet 701, le module RFID 20 et à l'antenne 30 restent solidaires du linge à l'intérieur de l'ourlet 701 tout en restant non invisible pour l'utilisateur du produit textile. Il est ainsi possible de retrouver le propriétaire original du linge malgré l'arrachage de la partie visible de l'étiquette, voire de détecter un vol de linge à l'aide d'un lecteur d'étiquette placé dans un lieu de passage. En outre, la pose des indications graphiques et la pose de l'élément de radio-identification sont réalisées par une seule opération de placement d'étiquette sur le textile.

La figure 12 illustre un procédé de fixation sur un produit textile d'une étiquette selon l'invention en utilisant deux zones de garde 305 pour réaliser l'opération de couture. Dans cet exemple, l'étiquette électronique de radio-identification est pliée en deux avant d'être cousue. Une fois pliée, l'étiquette est placée sur le tissu 800 au niveau d'une ligne de couture 801 de sorte que le fil de couture prenne l'étiquette au niveau des zones de garde 305 permettant de coudre l'étiquette de manière affleurante. Le module RFID 20 et l'antenne 30 sont placées à l'intérieur de la boucle formée par l'étiquette ne laissant visible à l'utilisateur que la zone d'impression 302.

De nombreuses variantes de l'invention sont possibles. Notamment, l'invention définie une zone d'impression et une zone de communication. Dans la présente description, l'impression d'étiquettes se fait uniquement sur la face comportant les marques de repérage 301. Toutefois, il est également possible d'imprimer l'autre face de l'étiquette. Néanmoins, une impression sur l'autre face devra se faire à l'aide des marques de repérage pour d'une part imprimer sur une seule étiquette et de préférence en dehors des zones de communication 303. En effet, la pression à chaud réalisée pour fixer la couche de maintien 360 présente de nombreux reliefs au niveau du module RFID ce qui ne permet pas d'avoir une impression acceptable pour une étiquette destinée à être lue par un utilisateur final. On pourra toutefois imprimer par jet d'encre, par tamponnage ou par laser en dehors de la zone de communication 303.

Dans la présente description, l'impression de la bande 300 se fait avant la fixation du module RFID 20 car cela permet d'utiliser tout type de machine d'impression, notamment rotative. Néanmoins, une impression par tamponnage ou jet d'encre ou encore une broderie de logo reste possible sur la zone d'impression 302 car celle-ci reste une zone homogène. Il reste toutefois nécessaire d'imprimer des marques de repérage 301 avant la pose du module RFID 20 afin de pouvoir positionner la bande 300 lors de sa fabrication et également en vue des impressions ultérieures.

Egalement, à la fin de la fabrication, la bande 300 est enroulée pour former un rouleau 390. Même si le conditionnement en rouleau est l'un des plus courants, ce type de conditionnement peut être remplacé par d'autres types de conditionnement. La bande 300 peut par exemple être repliée en zigzag afin de s'adapter à des machines de placement qui ne comporte pas de rouleau d'approvisionnement. L'important est de fournir un ensemble d'étiquettes sous la forme d'une bande apte à être reçues par une machine de placement qui va pouvoir repérer une étiquette, la couper, la placer et la coudre.

Comme autre variante envisageable, la couche de maintien 360 est préférentiellement réalisée par une couche de type textile. Selon une variante, cette couche textile peut être remplacée par une couche thermoplastique. Ainsi, l'utilisation d'une couche adhésive 330 peut ne pas être nécessaire. En outre, l'utilisation d'une couche thermoplastique peut permettre au moment du placement de l'étiquette, un chauffage de l'étiquette peut assurer un maintien temporaire de l'étiquette sur le textile qui permet une manipulation plus aisée de l'ensemble tant que la couture de l'étiquette n'est pas réalisée. Toujours afin d'assurer une fixation temporaire d'une étiquette sur un textile, il est également possible de déposer par-dessus la couche de maintien un ou plusieurs points de colle temporaire.

## Revendications

1. Machine de placement sur des produits textiles d'étiquettes électroniques de radio-identification issues respectivement d'une bande d'étiquettes électroniques de radio-identification issue d'une bande de tissu (310) obtenue à partir d'un rouleau de tissu (320), ladite bande (300) d'étiquettes électroniques de radio-identification comportant :
- des marques de repérage (301) pour indiquer une zone de séparation de deux étiquettes adjacentes ;
- pour chaque étiquette :
i. une antenne amplificatrice (30) formée à l'aide d'un fil conducteur isolé ou un câble comportant une multitudes de brins par couture ou broderie, selon une configuration comportant au moins une boucle ;
ii. un module électronique (20) de radio-identification placé à l'intérieur de ladite au moins une boucle en son centre, sur une face opposée à la face comprenant lesdites marques de repérage (301), ledit module électronique étant recouvert par une bande de maintien (360) solidaire de ladite bande de tissu (310),
les antennes amplificatrices (30) et les modules électroniques (20) desdites étiquettes étant respectivement imprimées et placés par rapport auxdites marques de repérage (301),
ladite machine comportant un moyen de détection de marques de repérage (301) sur la bande d'étiquettes électroniques (300) pour provoquer une découpe de celle-ci, dissociant ainsi les étiquettes électroniques de ladite bande (300) puis la couture de chaque étiquette électronique obtenue sur un produit textile (600, 700, 800),
**caractérisée en ce que** la machine de placement comporte un dispositif de détection d'une marque d'invalidation (950) sous la forme d'un trou ou d'une impression prédéterminée sur toute étiquette électronique de l'ensemble d'étiquettes électroniques, ledit dispositif de détection étant configuré pour provoquer une mise au rebut préalable d'une étiquette électronique portant une telle marque d'invalidation préalablement à un placement de ladite étiquette électronique sur un produit textile (600, 700, 800).

2. Machine de placement selon la revendication précédente, dans laquelle le dispositif de détection est un moyen optique qui repère une telle marque d'invalidation (950).

3. Machine de placement selon l'une des revendications précédentes, laquelle comporte un dispositif de détection sous la forme d'un lecteur d'étiquettes électroniques sans contact agencé pour :
- lire une information d'identification émise par le module électronique (20) de toute étiquette issue de la bande d'étiquettes (300) et ne portant pas une marque d'invalidation,
- détecter un module électronique (20) défaillant lorsque la lecture n'est pas possible ou est erronée, et
- provoquer une mise au rebut préalable d'une telle étiquette électronique préalablement au placement de celle-ci sur un produit textile (600, 700, 800).

4. Machine de placement l'une des revendications précédentes, comportant un lecteur d'étiquettes électroniques agencé pour lire le contenu du module électronique (20) de toute étiquette cousue sur un produit textile (600, 700, 800) et transférer à une base de données une information d'identification de ladite étiquette électronique conjointement avec un identifiant de ladite machine de placement ainsi que la date et l'heure à laquelle ladite machine a effectué la couture de ladite étiquette électronique sur ledit produit textile.

5. Machine selon l'une des revendications précédentes, laquelle comporte un dispositif d'encollage agencé pour déposer ou activer une couche adhésive sur une étiquette électronique issue de la bande d'étiquettes électroniques (300) préalablement au placement de ladite étiquette électronique sur une produit textile afin de maintenir la position de ladite étiquette jusqu'à la couture de celle-ci sur le produit textile.

6. Machine selon l'une des revendications précédentes agencée pour fixer une étiquette électronique, issue de ladite bande d'étiquettes électroniques (300), par couture (702) dans un ourlet (701) du produit textile (700), ladite étiquette électronique étant positionnée avant couture de sorte que ledit ourlet (701) comporte la partie de ladite étiquette électronique qui comprend le module électronique (20).

7. Machine selon l'une des revendications 1 à 5, ladite bande (300) comportant des prédécoupes (306), chaque prédécoupe étant localisée à proximité d'une zone (304) destinée à recevoir une couture afin de rompre en cas d'arrachage de l'étiquette lorsque celle-ci sera cousue sur ledit produit textile (700) et dans lequel la zone (304) destinée à recevoir une couture est placée dans une partie centrale de l'étiquette, de sorte qu'une partie de l'étiquette reste solidaire du produit textile après l'arrachage d'une autre partie
ladite machine est agencée pour fixer, une étiquette électronique issue de ladite bande d'étiquettes électroniques (300) par couture (702) dans un ourlet (701) du produit textile (700), ledit ourlet comportant la partie de ladite étiquette électronique qui comprend le module électronique (20) à l'exclusion de la prédécoupe (306) de l'étiquette électronique, ladite prédécoupe étant placée à proximité de la couture (702) formant l'ourlet (701) et fixant ladite étiquette électronique sur le produit textile (700).

8. Produit textile (700) **caractérisé en ce qu'**il est directement obtenu après placement d'une étiquette électronique par une machine de placement selon l'une des revendications 6 ou 7.
